# EUROPEAN PATENT APPLICATION

(11) **EP 1 582 992 A2**
(43) Date of publication of application: **05.10.2005**
(21) Application number: 04256736.2
(22) Date of filing: 01.11.2004
(51) Int. Cl.: G06F 17/21

(54) **Program, method, apparatus and computer-readable recording medium for editing a document structure**

(30) Priority: 30.03.2004 JP 2004101089
(71) Applicant: FUJITSU LIMITED, Kanagawa 211-8588 (JP)
(72) Inventor: Naitou, Masaya, c/o Fujitsu Limited, Kawasaki-shi Kanagawa 211-8588 (JP)
(74) Representative: Stebbing, Timothy Charles

(57) **Abstract**

A document structure-editing apparatus 1 which is capable of automatically generating difference information indicative of the differences between an old schema and a new schema is provided. Document structure-defining information 2 is edited by a document structure-editing device 1a in response to an operating input. At this time, a record of an edit history indicating details of editing of the document structure-defining information is recorded on a storage device 1c by an edit history-recording device 1b, whenever the operating input is performed. Difference information indicative of the differences between the document structure-defining information 2 before an edit and the same 3 after the edit is generated by a difference information-generating device 1e, based on the edit history recorded by the edit history-recording device 1b.

## Description

The present invention relates to a document structure-editing program, a document structure-editing method, and a document structure-editing apparatus, and more particularly to a document structure-editing program, a document structure-editing method, and a document structure-editing apparatus, which edit a document structure formed by a schema and linkbases.

If the structures of documents used for specific purposes are made uniform, it is easier to process the documents by a computer. To this end, various types of languages for describing document structures have been proposed. For example, XML (extensible Markup Language) is a language for describing structured documents. When documents are managed by XML, the structure of the documents is defined by a schema (language used for describing a document structure to which XML documents conform). XML documents are created such that they have a document structure conforming to the schema.

By the way, as the use of documents expands, the structure of documents is sometimes changed. In such a case, it is necessary to change not only the schema but also documents already created such that they conform to the resulting schema. At this time, it takes too much time and labor to manually change the document structure of all the existing documents by using an editor or the like.

To avoid this inconvenience, there is employed a method of automatically converting an XML document to another XML document using a file which describes difference information indicative of the differences between the XML documents. For example, XBRL (extensible Business Reporting Language) is a language regarded as a global standard for this purpose in the field of business reporting based on financial information. In XBRL, a taxonomy (hierarchical data dictionary defining a document structure) describing a document structure and the like to which an XML document conforms is converted according to a change in accounting standards. In doing this, if a file describing difference information between old and new taxonomies is created in advance, it becomes easy to convert XML documents formed according to the old taxonomy to XML documents formed according to the new taxonomy.

If data of XML documents compliant with old accounting standards can be converted to data of XML documents compliant with new accounting standards, it is possible to deal with old and new data by processing based on the new accounting standards. This makes it very easy to describe, for example, a program for comparing financial data for the past ten years.

Although a document structure can be very easily converted using difference information as described above, it takes much time and labor to create the difference information. To solve this problem, techniques for easily generating a differential file describing the differences between document structures have been proposed. For example, there is a technique of generating XSLT data indicative of the differences between XML data to be updated and XML data updated, during update of XML data (see e.g. Japanese Unexamined Patent Publication (Kokai) No. 2003-256249).

However, according to Japanese Unexamined Patent Publication (Kokai) No. 2003-256249, the difference information is generated from XML data which has been already generated and is to be updated and XML data which has been updated, and hence there is a fear that a conversion in document structure cannot be accurately reflected on the difference information. Therefore, it is necessary to generate difference information between schemas, i.e. definition files of the document structures. The difference information of the schemas is edited e.g. by an editor. In XBRL, for example, a description file of the difference information is created by comparing an old taxonomy and a new taxonomy. Such edit operation is troublesome and time-consuming, and inefficient. Moreover, the amount of operation of inputting information increases with increase in the amount of the difference. Such edit operations and manual changes to document structures can also introduce errors. Thus, there is a need for better techniques to generate difference information between structured data files in the form of documents.

It is therefore desirable to provide a document structure-editing program, a document structure-editing method, and a document structure-editing apparatus, which are capable of automatically generating difference information indicative of the differences between an old schema and a new schema.

According to a first aspect of the present invention, there is provided a document structure-editing program for editing document structure-defining information defining a structure of a structured document. This document structure-editing program causes a computer to function as document structure-editing means for editing the document structure-defining information in response to an operating input, edit history-recording means for recording a record of an edit history indicating details of editing of the document structure-defining information, on a storage device, whenever the operating input is performed, and difference information-generating means for generating difference information indicative of differences between the document structure-defining information before an edit and the document structure-defining information after the edit, based on the edit history recorded by the edit history-recording means.

According to a second aspect of the present invention, there is provided a document structure-editing method for editing document structure-defining information defining a structure of a structured document. This document structure-editing method comprises a document structure-editing step of editing the document structure-defining information in response to an operating input, an edit history-recording step of recording a record of an edit history indicating details of editing of the document structure-defining information on a storage device, whenever the operating input is performed, and a difference information-generating step of generating difference information indicative of differences between the document structure-defining information before an edit and the document structure-defining information after the edit, based on the edit history recorded in the edit history-recording step.

According to a third aspect of the present invention, there is provided a document structure-editing apparatus for editing document structure-defining information defining a structure of a structured document. This document structure-editing apparatus comprises document structure-editing means for editing the document structure-defining information in response to an operating input, edit history-recording means for recording a record of an edit history indicating details of editing of the document structure-defining information on a storage device, whenever the operating input is performed, and difference information-generating means for generating difference information indicative of differences between the document structure-defining information before an edit and the document structure-defining information after the edit, based on the edit history recorded by the edit history-recording means.

The above and other features and advantages of the present invention will become apparent from the following description when taken in conjunction with the accompanying drawings which illustrate preferred embodiments of the present invention by way of example, and in which:
FIG. 1 is a schematic diagram showing the concept of the present invention applied to an embodiment thereof.
FIG. 2 is a diagram showing an example of a system configuration of the embodiment.
FIG. 3 is a diagram showing an example of a hardware configuration of a document structure definition-editing apparatus used in the embodiment.
FIG. 4 is a functional block diagram of the document structure definition-editing apparatus.
FIG. 5 is a diagram showing an example of a taxonomy edit screen.
FIG. 6 is a diagram showing an example of an XML schema edit screen.
FIG. 7 is a conceptual view useful in explaining how difference information is generated.
FIG. 8 is a flowchart showing the procedure of an edit history-accumulating process.
FIG. 9 is a diagram showing an example of an old XML schema.
FIG. 10 is a diagram showing an example of an old presentation link.
FIG. 11 is a diagram showing a taxonomy edit screen on which an old taxonomy is displayed.
FIG. 12 is a diagram showing a taxonomy edit screen on which a new taxonomy obtained by executing edit operations is displayed.
FIG. 13 is a diagram showing an example of a data structure of an edit history-managing table.
FIG. 14 is a diagram showing an example of a new XML schema.
FIG. 15 is a diagram showing an example of a new presentation link.
FIG. 16 is a diagram showing an example of difference information.
FIG. 17 is a diagram showing an example of operations on the XML schema which can be improved in efficiency.
FIG. 18 is a diagram showing an example of operations on linkbases which can be improved in efficiency.
FIG. 19 is a diagram showing an example of an edit history-managing table which can be improved in efficiency.
FIG. 20 is a diagram showing an example of an edit history-managing table improved in efficiency.
FIG. 21 is a diagram showing an example of option information which can be set.
FIG. 22 is a conceptual diagram useful in explaining an option information-setting process.
FIG. 23 is a diagram showing an example of an option-setting screen.

Hereafter, a preferred embodiment of the present invention will be described with reference to the drawings.

First, an outline of the present invention applied to a preferred embodiment thereof will be described, and then, details of the preferred embodiment will be described.

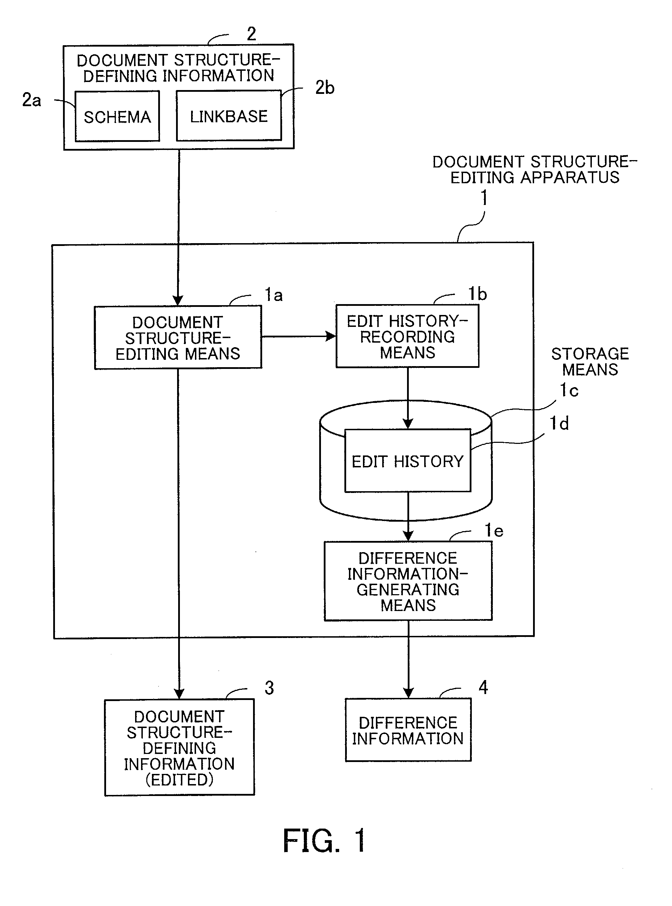

FIG. 1 is a schematic diagram showing the concept of the present invention applied to the preferred embodiment thereof. A document structure-editing apparatus 1 is for editing document structure-defining information 2 which defines the structure of a structured document. The document structure-defining information 2 is comprised e.g. of a schema 2a defining elements constituting the structured document, and a linkbase 2b which defines associations between the elements and information associated with the elements. The document structure-editing apparatus 1 includes a document structure-editing means 1a, an edit history-recording means 1b, a storage means 1c, and a difference information-generating means 1e.

The document structure-editing means 1a edits the document structure-defining information 2 in response to an operating input. As a result of the editing, new document structure-defining information (edited) 3 is generated.

Whenever an operating input is performed, the edit history-recording means 1b records edit history 1d indicating details of editing of the document structure-defining information 2, on the storage means 1c. If the document structure-defining information 2 is comprised of the schema 2a and the linkbase 2b, information of both of the schema 2a and the linkbase 2b is sometimes edited by one operating input. In this case, the edit history-recording means 1b individually records an edit history 1d concerning the schema 2a and an edit history 1d concerning the linkbase 2b.

The difference information-generating means 1e generates difference information 4 indicative of the differences between the document structure-defining information before an edit and the same after the edit, based on the edit history 1d recorded by the edit history-recording means 1b. The difference information 4 includes information of additions, deletions, movements, etc. of elements.

According to the document structure-editing apparatus 1 described above, when a user performs an operating input for editing the document structure-defining information 2, the document structure-editing means 1a edits the document structure-defining information 2 in response to the operating input. At this time, whenever an operating input is performed, the edit history-recording means 1b records edit history 1d indicative of the details of the edit operation performed on the document structure-defining information 2 on the storage means 1c. Then, the difference information-generating means 1e generates the difference information 4 indicative of the difference between the document structure-defining information 2 before the edit and that after the edit, based on the edit history 1d recorded by the edit history-recording means 1b.

As described above, the use of the editing process, which creates new document structure-defining information 3 based on old document structure-defining information 2 makes it possible not only to create the new document structure-defining information 3 but also to easily create the difference information 4. As distinct from the conventional technique, this makes it unnecessary to manually create difference information 4 indicative of the difference between the old document structure-defining information 2 and the new document structure-defining information 3, after updating the old document structure-defining information 2, by comparing them, so that the troublesome operation of creating the difference information 4 is significantly saved. Moreover, since the difference information 4 is created based on the edit history 1d recorded in response to each operating input during editing of the document structure-defining information 2, the correlation between the elements of the old document structure-defining information 2 and the new document structure-defining information 3 is prevented from becoming unclear.

The generated difference information 4 is utilized to automatically convert the document structure of existing structured documents created according to the document structure-defining information 2 before the edit into the document structure conforming to the document structure-defining information 3 after the edit. Therefore, the details of conversion of the document structure-defining information are accurately reflected on the difference information 4, whereby it is possible to accurately convert the structured documents.

Further, as the amount of information (difference information commands) indicative of the details of the conversion of the document structure-defining information, contained in the difference information 4, is smaller, the structured document can be converted more efficiently. In view of this, it is possible to improve efficiency of the information indicative of the details of the conversion of the document structure-defining information during generation of the difference information 4. The efficiency is improved e.g. by combining a plurality of details of the conversion into one difference information command. For example, it is possible to perform the following efficiency-improving processing:
· A difference information command including "add A, B" (the command "add" instructs addition of an element or elements) is generated when elements A and B are added.
· A difference information command "convert from A to B" (the command "convert" instructs conversion from an element defined after "from" to an element defined after "to") is generated when an element A is deleted and an element B is added.
· A difference information command "merge from A, B, C to D" (the command "merge" instructs addition of the contents of elements defined after "from" to an element defined after "to") is generated when elements A, B, and C are deleted and an element D is added.
· A difference information command "split from A to B, C, D" (the command "split" instructs division of an element defined after "from" into a plurality of elements defined after "to") is generated when an element A is deleted, and elements B, C, and D are added.

Further, it is also possible to add, edit, or delete additional information (option information) to, on, or from the created difference information 4 in response to an operating input by the user. For example, addition and the like of the following option information is performed.
· Designation of an initial value when data is added by a difference information command "add A".
· Addition of an arithmetic operation, such as multiply by 10, when difference information commands, such as "convert from A to B", "merge from A, B, to C", and "split from A to B, C, D" are executed during conversion of the structured document.

Since addition or the like of option information can be performed, details of conversion of a structured document, which cannot be extracted through a taxonomy-editing process, can be caused to be contained in difference information. For example, when there is no change in a certain element in respect of the document structure, but a certain modification of the contents of the element in the structured document is desired, it is possible to define the details of the modification of the element by option information.

Next, a detailed description will be given of the embodiment for generating difference information when a taxonomy is updated by XBRL. It should be noted that the taxonomy is comprised of an XML schema and linkbases. The XML schema defines the vocabulary (the names, attributes, etc., of elements) of an instance (XML document). Further, the linkbases define document structures, the order of display of information items, and the order of processing steps of the same.

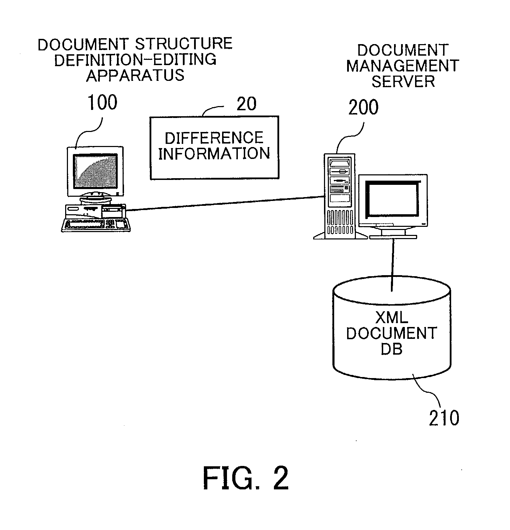

FIG. 2 is a diagram showing an example of the system configuration of the present embodiment. The illustrated system is comprised of a document structure definition-editing apparatus 100, and a document management server 200.

The document structure definition-editing apparatus 100 has a taxonomy-editing function (an editor for editing the taxonomy), and generates difference information 20 corresponding to details of editing of the taxonomy when the taxonomy is edited. The document management server 200 manages XML documents by an XML document DB 210.

When the difference information 20 is generated by the document structure definition-editing apparatus 100, the difference information 20 is passed to the document management server 200. The document management server 200 modifies the document structure of the XML documents in the XML document DB 210, based on the difference information 20.

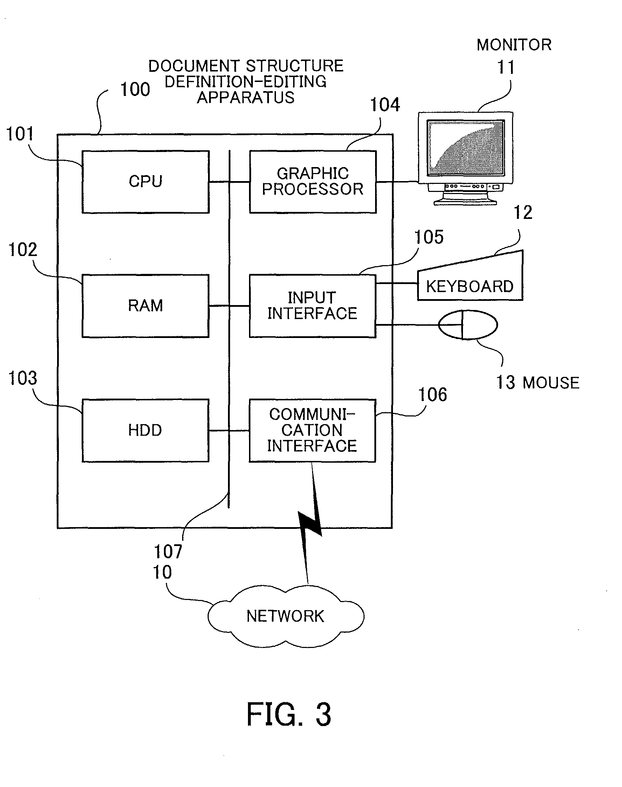

FIG. 3 is a diagram showing an example of the hardware configuration of the document structure definition-editing apparatus used in the present embodiment. The overall operation of the apparatus implementing the document structure definition-editing apparatus 100 is controlled by a CPU (Central Processing Unit) 101. A RAM (Random Access Memory) 102, a hard disk drive (HDD) 103, a graphic processor 104, an input interface 105, and a communication interface 106 are connected to the CPU 101 via a bus 107.

The RAM 102 temporarily stores at least part of the programs of an OS (Operating System) and application programs executed by the CPU 101. Further, the RAM 102 stores various data necessitated in processing by the CPU 101. The HDD 103 stores the OS and the application programs.

The graphic processor 104 is connected to a monitor 11. The graphic processor 104 displays an image on the screen of the monitor 11 in response to commands from the CPU 101. A keyboard 12 and a mouse 13 are connected to the input interface 105. The input interface 105 sends signals inputted from the keyboard 12 and the mouse 13 to the CPU 101 via the bus 107.

The communication interface 106 is connected to the network 10. The communication interface 106 performs transmission and reception of data to and from other computers over the network 10.

The hardware configuration described above can realize the processing functions of the present embodiment. Although FIG. 3 shows the example of the hardware configuration of the document structure definition-editing apparatus 100, it is also possible to realize the document management server 200 by the same hardware configuration.

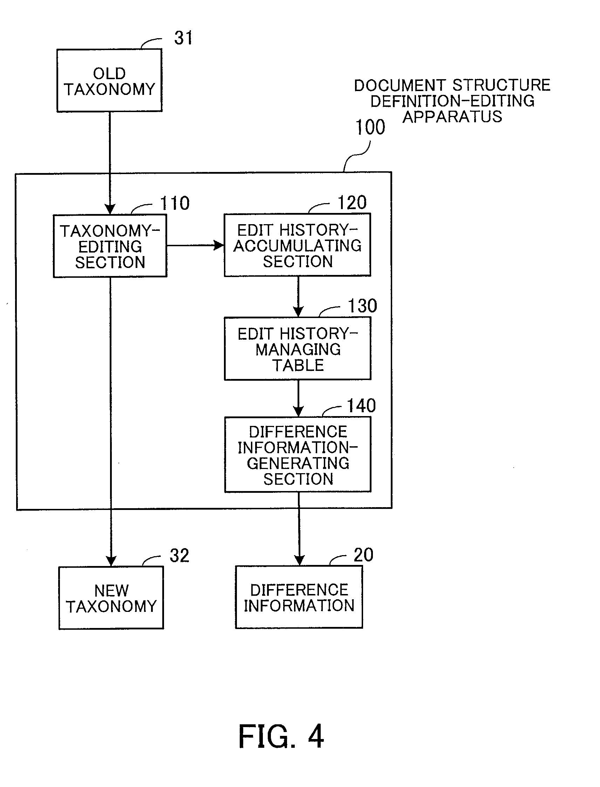

FIG. 4 is a functional block diagram of the document structure definition-editing apparatus. The document structure definition-editing apparatus 100 is comprised of a taxonomy-editing section 110, an edit history-accumulating section 120, an edit history-managing table 130, and a difference information-generating section 140.

The taxonomy-editing section 110 edits an old taxonomy 31 in response to an operating input by the user to generate a new taxonomy 32. More specifically, the taxonomy-editing section 110 has a graphical user interface (GUI), and displays a document structure defined by the old taxonomy 31 on the screen of the monitor 11. Then, the taxonomy-editing section 110 edits the old taxonomy 31 according to an operating input performed by the user using the GUI.

The edit history-accumulating section 120 collects edit history records of editing of the old taxonomy 31 performed by the taxonomy-editing section 110, and accumulates the edit history records in the edit history-managing table 130. The edit history-managing table 130 is a data-storing area in which are recorded details of operations performed on the old taxonomy 31.

When the new taxonomy 32 is delivered from the taxonomy-editing section 110, the difference information-generating section 140 generates difference information 20 indicative of the difference between the old taxonomy 31 and the new taxonomy 32, based on the edit history (records) stored in the edit history-managing table 130. The generated difference information 20 is stored e.g. in the HDD 103.

If the user performs an edit operation for editing the old taxonomy 31 by the document structure definition-editing apparatus 100 configured as above, the new taxonomy 32 and the difference information 20 are generated. It should be noted that since the taxonomy-editing section 110 has the GUI, it is possible for the user to edit the taxonomy by operating a mouse or the like on a GUI screen.

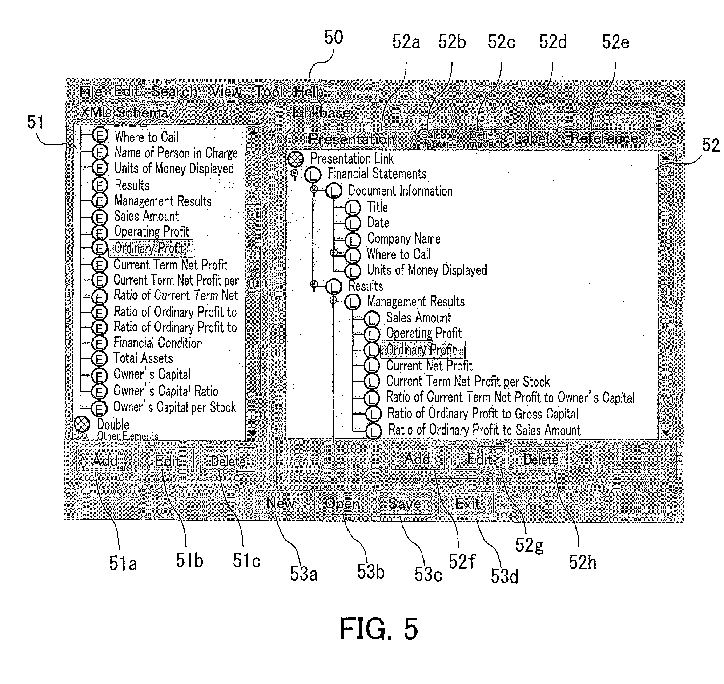

FIG. 5 is a diagram showing an example of a taxonomy edit screen. The taxonomy edit screen 50 is divided into an XML schema-displaying section 51, and a linkbase-displaying section 52. On the XML schema-displaying section 51, the XML schema of the taxonomy is displayed. The XML schema defines the relationship between the elements of an XML document to be produced in a tree structure.

The linkbase-displaying section 52 displays the linkbase of the taxonomy. The linkbases include presentation, calculation, definition, label, and reference. The linkbase-displaying section 52 has tabs 52a, 52b, 52c, 52d, and 52e arranged therein in association with the respective linkbases for allowing the user to select one of them to thereby display a linkbase corresponding to the tab selected by the user thereon. In short, as shown in FIG. 5, the taxonomy of XBRL is a set of the XML schema and the five linkbases.

In the illustrated example, Presentation Link represents the linkbase of presentation as information defining appearances of the elements (order and hierarchical structure thereof). Calculation Link represents the linkbase of calculation as information defining the details of calculations (calculating expressions, elements as variables, and elements to which results of calculations are set). Definition Link represents the linkbase of definition which defines the logical structures of the elements. In Definition Link, there are often provided the same definitions provided in Reference Link. Label Link represents the linkbase of label which defines the label names of the elements. Label Link can be defined on a language-by-language basis. Reference Link represents the linkbase of reference which defines references consulted in setting values to the elements (references serving as bases of accounting concepts).

In editing the XML schema, the user depresses one of an add button 51a, an edit button 51b, and a delete button 51c. When the add button 51a is depressed, an item-adding edit screen is displayed. The user inputs necessary information to the edit screen, whereby a new item is added to the XML schema.

Further, when the user selects a desired item from the XML schema and depresses the edit button 51b, an edit screen for modifying the contents of the selected item is displayed. The user inputs necessary information to the edit screen, whereby the contents of the selected item are modified. When the user selects a desired item from the XML schema and depresses the delete button 51c, the selected item is deleted from the XML schema.

In editing a linkbase, the user depresses one of an add button 52f, an edit button 52g, and a delete button 52h. When the add button 52f is depressed, an item-adding edit screen is displayed. The user inputs necessary information to the edit screen, whereby a new item is added to the linkbase.

Further, when the user selects a desired item from the linkbase and depresses the edit button 52g, an edit screen for modifying the contents of the selected item is displayed. The user inputs necessary information to the edit screen, whereby the contents of the selected item are modified. When the user selects a desired item from the linkbase and depresses the delete button 52h, the selected item is deleted from the linkbase.

The taxonomy edit screen 50 is provided with a new button 53a, an open button 53b, a save button 53c, and an exit button 53d. The new button 53a is for displaying a screen for producing a new taxonomy. The open button 53b is for reading an existing taxonomy. The user depresses the open button 53b to designate the old taxonomy 31 to be edited, whereby the old taxonomy 31 can be read into the taxonomy-editing section 110.

The save button 53c is for saving the edited taxonomy as a new taxonomy 32. When the save button 53c is depressed by the user, the new taxonomy 32 is stored in the HDD 103 by the taxonomy-editing section 110. The exit button 53d is for terminating the editing.

Next, a case where a desired item of the XML schema is edited will be described as an example of editing of the taxonomy. When the user selects an item of the XML schema, and depresses the edit button 51b, an edit screen is displayed.

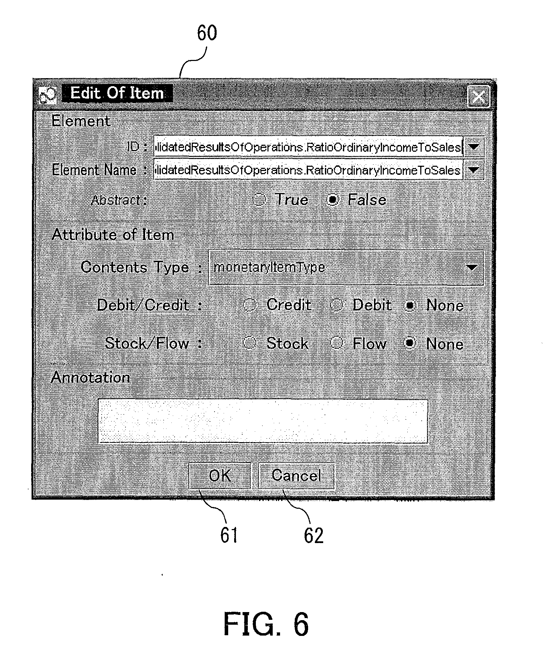

FIG. 6 is a diagram showing an example of an XML schema edit screen. On the edit screen 60, it is possible to input the ID, attribute, etc. of each element. When an OK button 61 is depressed, inputted information is finally determined, and the contents of the XML schema are updated. When a cancel button 62 is depressed, the edit screen 60 is closed without updating the XML schema.

When the taxonomy is edited in response to an operating input by the user, processing for generating the difference information 20 is performed.

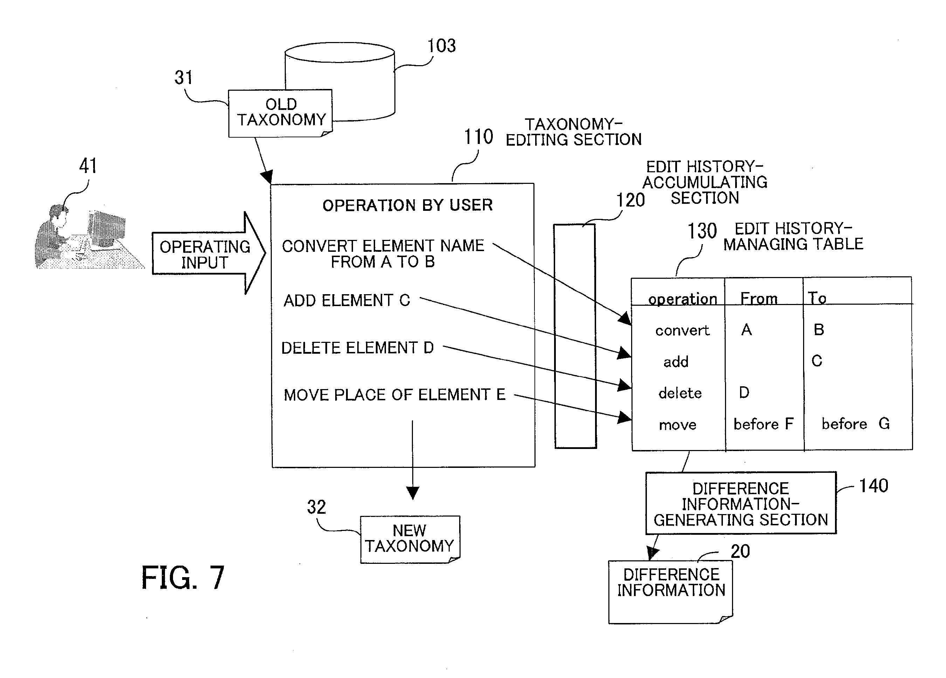

FIG. 7 is a conceptual view useful in explaining how difference information is generated. A user 41 performs an operating input to designate an old taxonomy 31 to be edited, from information stored in the HDD 103. Then, the taxonomy-editing section 110 reads in the designated old taxonomy 31 from the HDD 103, and displays the same on the monitor 11.

The user 41 carries out operations for editing the old taxonomy 31 on the screen of the taxonomy-editing section 110, and creating a new taxonomy 32. In the example illustrated in FIG. 7, operating inputs instructing the taxonomy-editing section 110 to "read in an old taxonomy", "convert an element name", "add a new element", "delete an element", "move an element", "save a modified taxonomy as a new taxonomy" are executed. The taxonomy-editing section 110 edits the old taxonomy 31 in response to the operating inputs, thereby generating the new taxonomy 32.

Further, details of the operating inputs by the user 41 are monitored by the edit history-accumulating section 120, and accumulated in the edit history-managing table 130 as required. Then, the difference information 20 is generated by the difference information-generating section 140.

Next, the processing procedure of an edit history-accumulating process will be described.

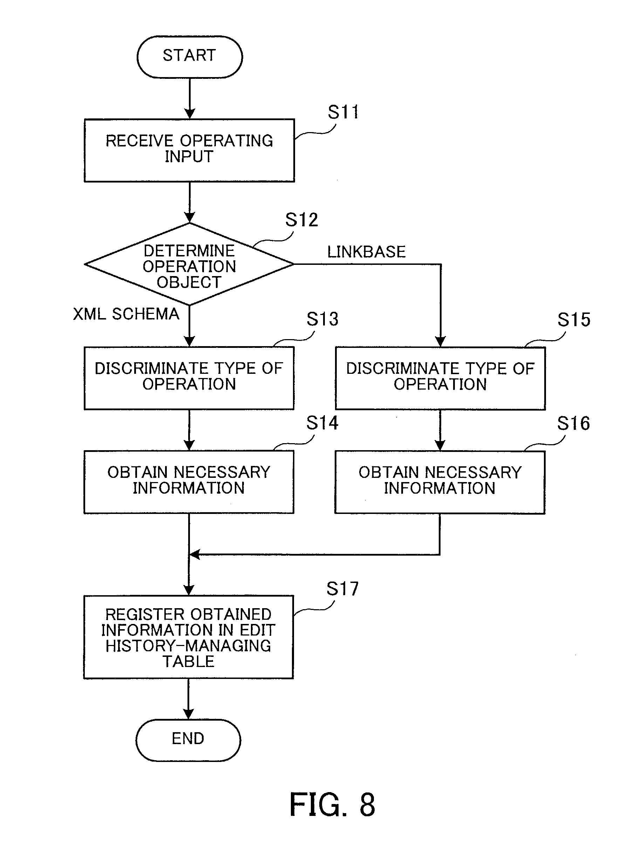

FIG. 8 is a flowchart showing the procedure of the edit history-accumulating process. In the following, the process shown in FIG. 8 will be described in the order of step numbers.

[Step S11] The edit history-accumulating section 120 receives an operating input performed by the user for an edit operation.

[Step S12] The edit history-accumulating section 120 determines an operation object. More specifically, the edit history-accumulating section 120 determines whether an area in which the user has performed the operating input is within the XML schema-displaying section 51 or the linkbase-displaying section 52. If the operating input has been performed within the XML schema-displaying section 51, the process proceeds to a step S13, whereas if the operating input has been performed within the linkbase-displaying section 52, the process proceeds to a step S15.

It should be noted that there is a case in which both of the XML schema and the linkbases are to be processed. In such a case, processing through steps S13, S14, and S17, and processing through steps S15 to S17 are both carried out.

[Step S13] The edit history-accumulating section 120 determines the type (add, delete, convert, or the like) of the edit operation performed on the XML schema.

[Step S14] The edit history-accumulating section 120 obtains necessary information (information before a change, information after the change, an object to be changed) from the old taxonomy 31 and the like in response to the edit operation. After that, the process proceeds to the step S17.

[Step S15] The edit history-accumulating section 120 determines the type (add, delete, convert, or the like) of the edit operation performed on the linkbase.

[Step S16] The edit history-accumulating section 120 obtains necessary information (information before an edit, information after the edit, an object to be edited) from the old taxonomy 31 and the like in response to the edit operation.

[Step S17] The edit history-accumulating section 120 registers the information (object to be edited, edit operation, information before the edit, information after the edit) collected in the step S14 or the step S16 in the edit history-managing table 130.

Next, a difference information-generating process will be described in detail with reference to an example of data. Although the old taxonomy 31 includes the XML schema and the five linkbases, the following description will be given assuming that the XML schema and Presentation Link are edited.

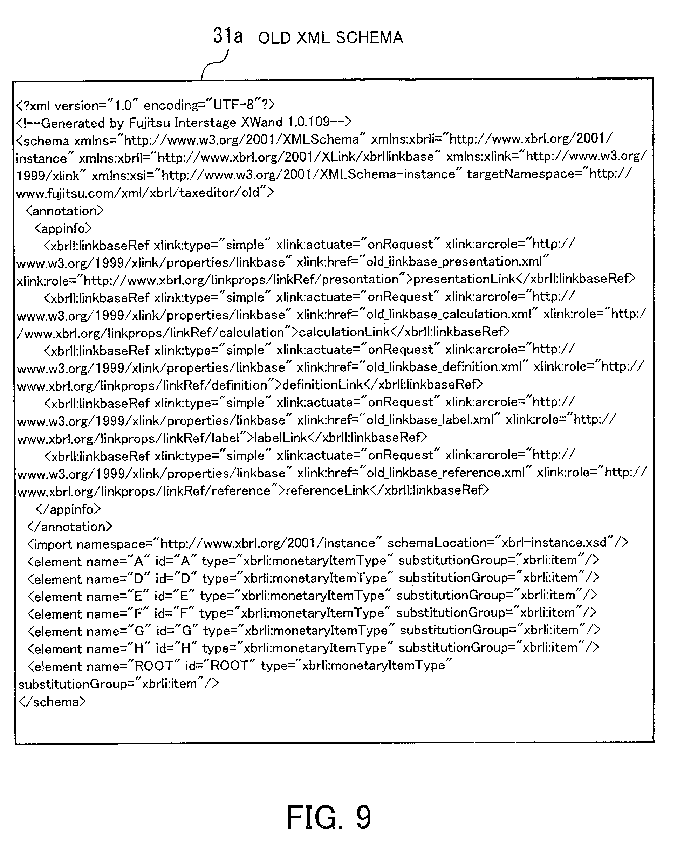

FIG. 9 is a diagram showing an example of an old XML schema. The document structure of an XML document is defined by the old XML schema 31a illustrated in the figure.

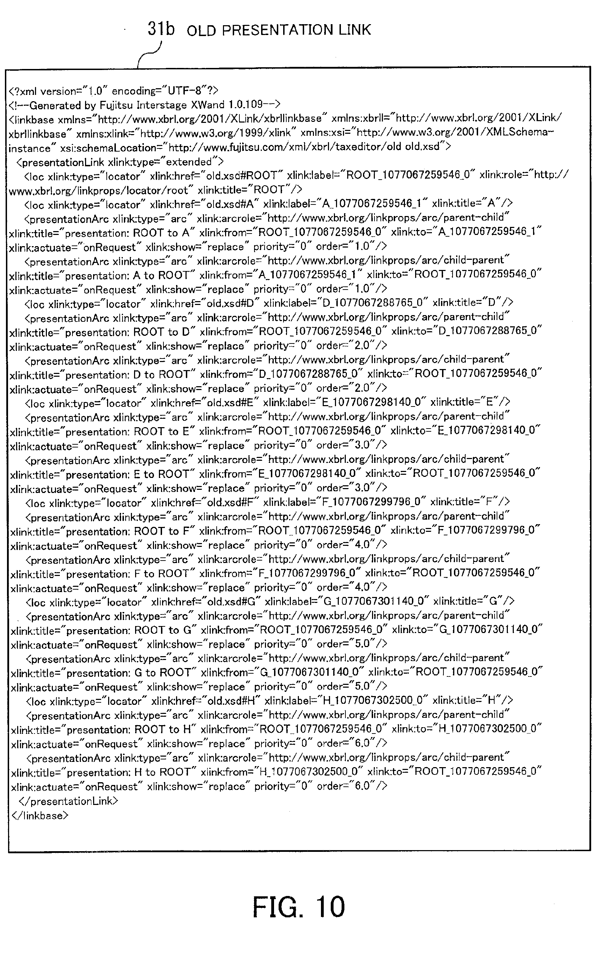

FIG. 10 is a diagram showing an example of an old presentation link. The old Presentation Link 31b is created according to the old XML schema 31a.

When the old taxonomy 31 is read into the taxonomy-editing section 110, and the tab 52a corresponding to Presentation Link is selected in the linkbase-displaying section 52, the contents of the old XML schema 31a and the old Presentation Link 31b shown in FIG. 9 and FIG. 10 are displayed on the monitor 11.

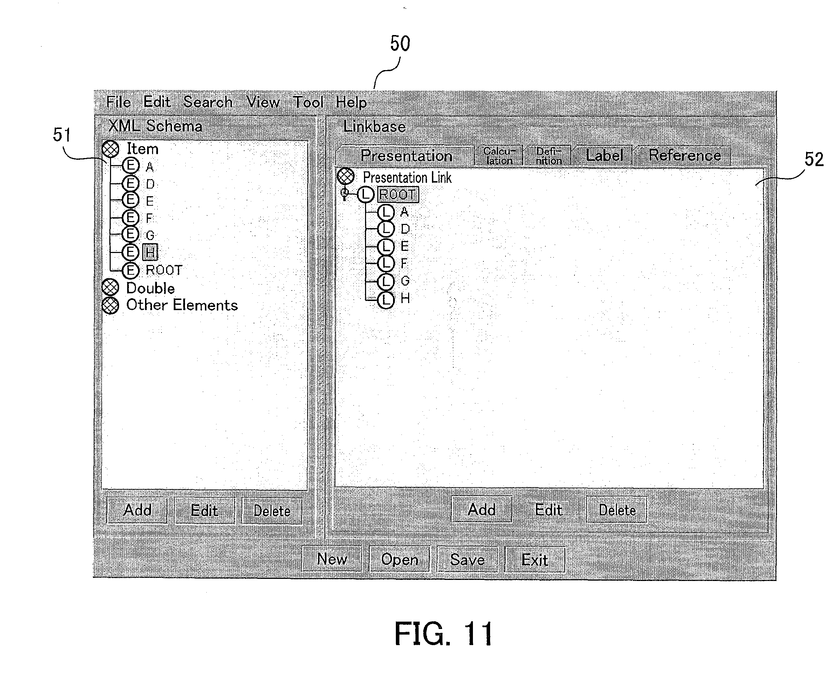

FIG. 11 is a diagram showing a taxonomy edit screen on which the old taxonomy is displayed. The contents of the old XML schema 31a shown in FIG. 9 are displayed on the XML schema-displaying section 51 of the taxonomy edit screen 50, and the old Presentation Link 31b shown in FIG. 10 is displayed on the linkbase-displaying section 52 of the taxonomy edit screen 50.

Now, let it be assumed that the user has performed the following operating inputs:
(1) Starting the taxonomy-editing section 110 and reading in the old taxonomy 31.
(2) Converting an element name A into an element name B. In response to this operating input, the taxonomy edit screen 50 converts the old element name of the XML schema into the new one, and at the same time if a corresponding element exists in the linkbase, also coverts the old name of the corresponding element in the linkbase to the new one.
(3) Adding an element C. In response to this operating input, the taxonomy edit screen 50 adds the element to the XML schema.
(4) Enabling the added element C to be displayed before an element H. In response to this operating input, the taxonomy edit screen 50 adds a display place to the linkbase-displaying section 52.
(5) Deleting an element D. In response to this operating input, the taxonomy edit screen 50 deletes the element from the XML schema, and at the same time if a corresponding element is contained in the linkbase, deletes the corresponding element as well from the linkbase.
(6) Moving a display place for displaying the element E from a place before an element F to a place before an element G. In response to this operating input, the taxonomy edit screen 50 changes the arrangement of corresponding elements in the linkbase so as to change the display places. At this time, there is no change in the XML schema.

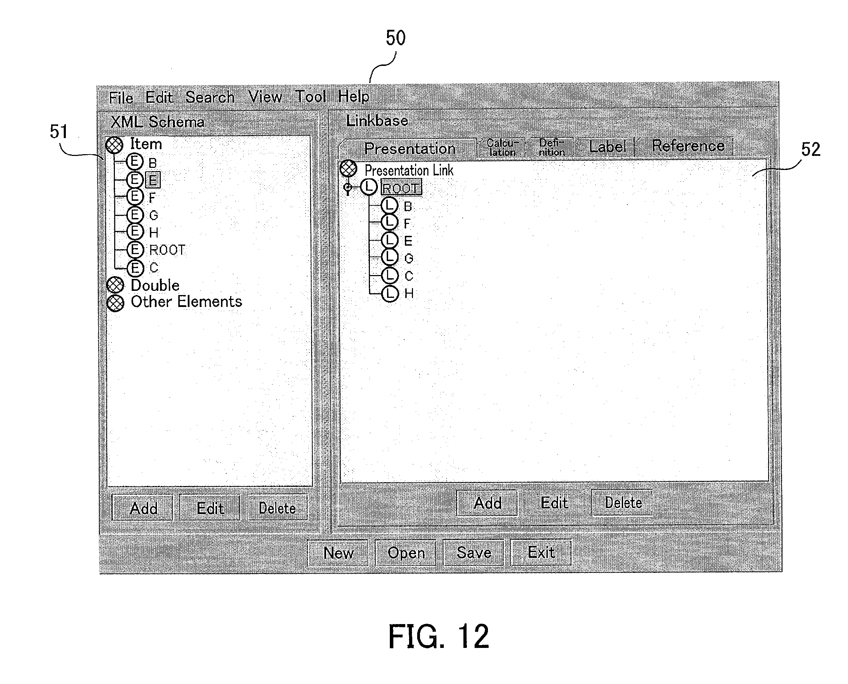

FIG. 12 is a diagram showing a taxonomy edit screen on which a new taxonomy formed by the editing operations is displayed. Thus, the XML schema and the linkbases are updated in response to the operating inputs on the taxonomy edit screen 50. By execution of the operating inputs for editing, the edit history is registered in the edit history-managing table 130.

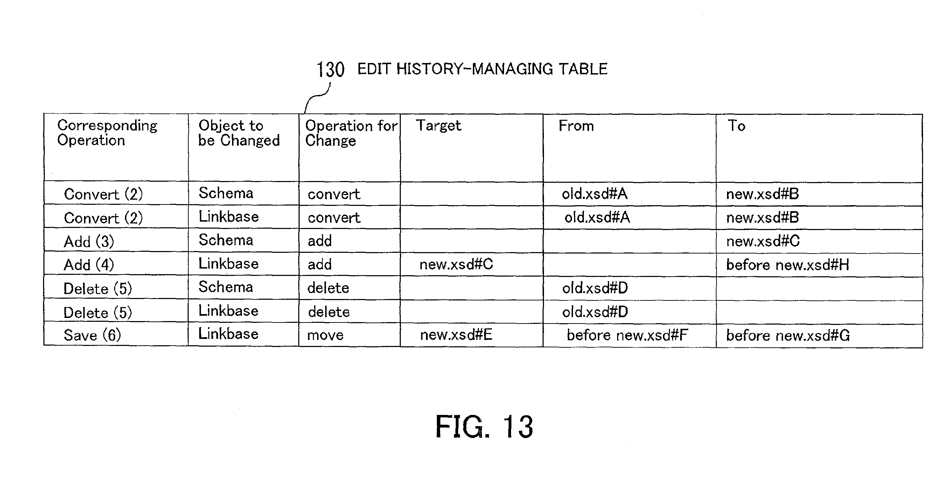

FIG. 13 is a diagram showing an example of a data structure of the edit history-managing table. The edit history-managing table 130 is provided with columns of "Corresponding Operation", "Object to be Changed", "Operation for Change", "Target", "From", and "To", and information items arranged in the respective columns in each horizontal row are correlated with each other.

In the column of "Corresponding Operation", there are set pieces of information for identifying operating inputs. In the example illustrated in FIG. 13, respective numbers indicative of the steps of the above-described operating inputs are set within parentheses. In the column of "Object to be Changed", there are set items of information to be changed (whether the information to be changed is the XML schema or the linkbases). In the column of "Operation for Change", there are set names of commands to be executed in response to operating inputs. In the column of "Target", there are set the names of files to be processed in the XML schema. In the column of "From", there are set items to be edited. In the column of "To", there are set items of information indicative of how the object for edit is changed.

It should be noted that in the edit history-managing table 130 shown in FIG. 13, there is a case where a plurality of edit history records are created by a single operation by the user (first and second items, and fifth and sixth items from the top). This means that a plurality of files of the files constituting a taxonomy (XML schema and a plurality of linkbases) are edited in response to one operating input.

By recording one edit history record for each item of information of an object to be changed, instead of recording one edit history record for each operation, it is possible to create difference information on the XML schema alone, or difference information on a certain linkbase alone. This makes it easy for the user to selectively use required difference information according to the purpose.

When the user has completed the editing, a new taxonomy 32 is stored in the HDD 103, and at the same time the difference information between the old taxonomy 31 and the new taxonomy 32 is generated.

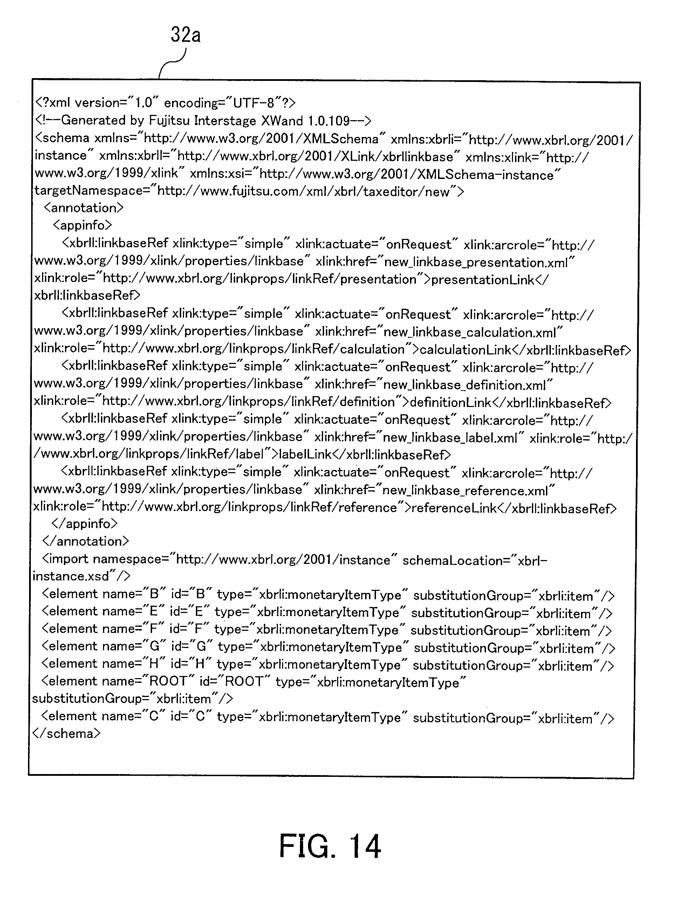

FIG. 14 is a diagram showing an example of a new XML schema. The document structure of an XML document is defined by such a new XML schema 32a shown therein.

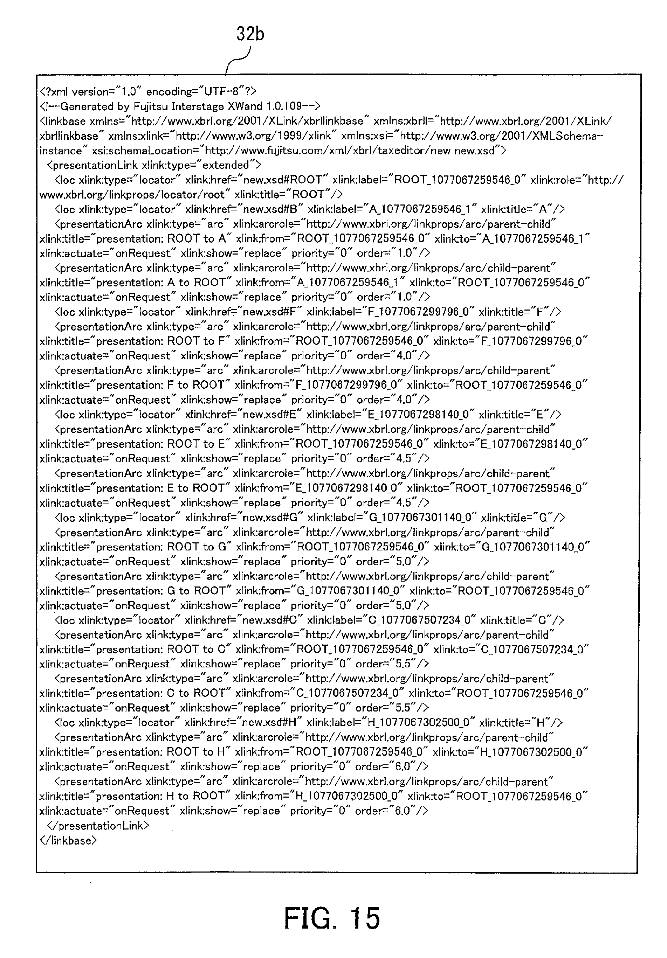

FIG. 15 is a diagram showing an example of a new presentation link. The new presentation link 32b is created according to the new XML schema 32a.

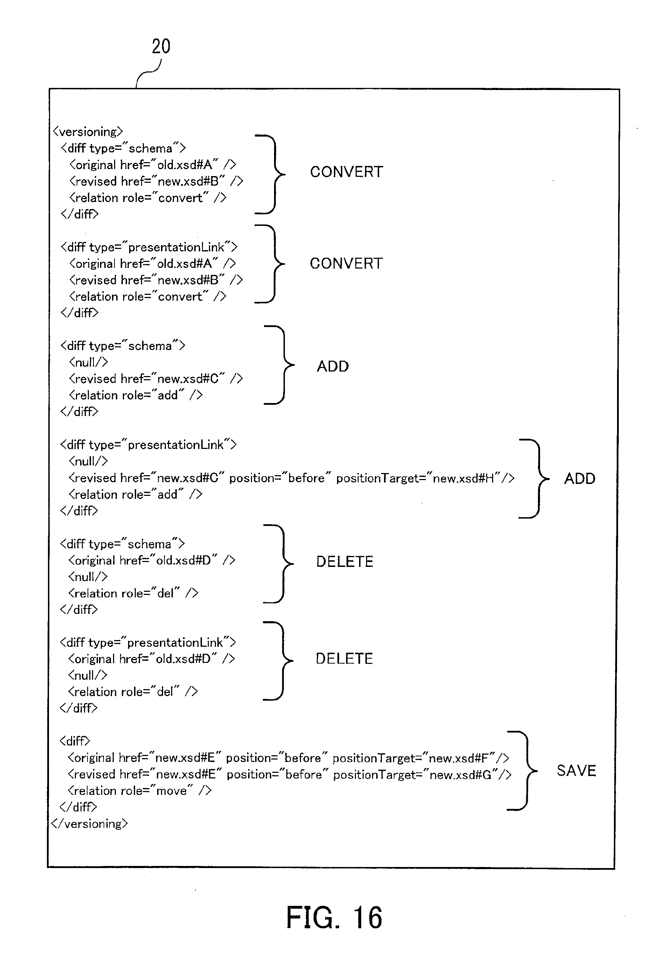

FIG. 16 is a diagram showing an example of difference information. Information indicative of the contents of each record registered in the edit history-managing table 130 is set in the difference information 20.

As described hereinabove, when the user edits the taxonomy, the difference information 20 is automatically generated. The use of the difference information 20 enables conversion of a structured document created in XBRL according to the old taxonomy 31 into one conforming to the new taxonomy 32.

Next, a description will be given of examples of application of the present embodiment.

### [Improving Efficiency of Difference Information]

When edit operations are performed, it is also possible to group or combine a plurality of edit operations into a single difference information command. In this case, only a portion of the edit history recorded from a time point when an instruction is input to start grouping of edit operations to a time point when an instruction is input to terminate the grouping may be set to an object to be grouped. Grouping the contents of a plurality of items of difference information makes it possible to reduce the number of steps of conversion processing executed on the structure of a document in XBRL, thereby improving the efficiency of the converting process.

The following shows combinations of items of difference information, which can be improved in efficiency.

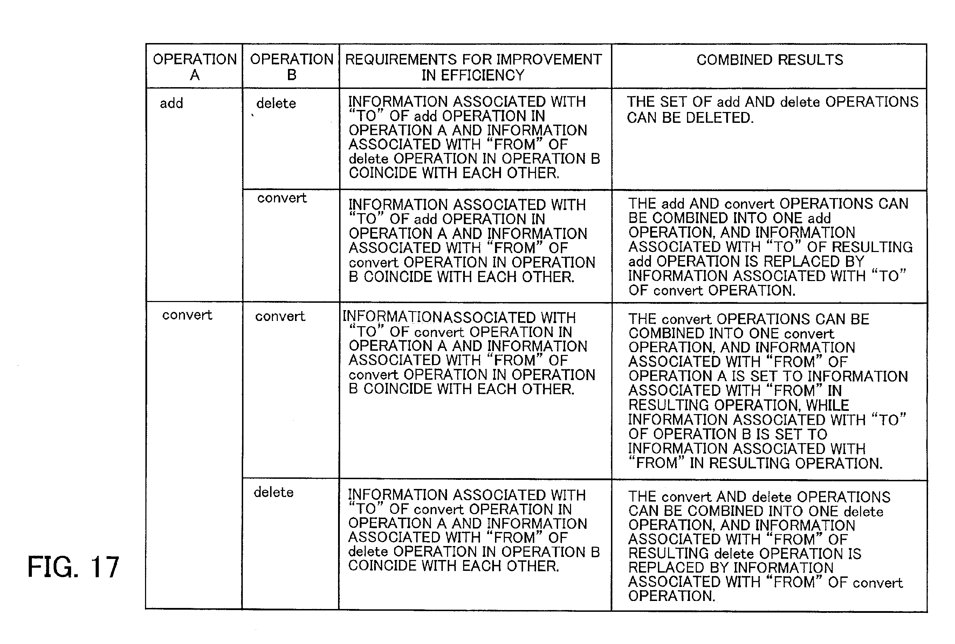

FIG. 17 is a diagram showing an example of operations performed on the XML schema, which can be improved in efficiency. In FIG. 17, there are shown requirements for improving efficiency and results of grouping, assuming that each of operations in the column of "Operation A" is executed and then a corresponding one of operations in the column of "Operation B" is executed.

For example, when an add operation is executed, and then a delete operation is executed, if information associated with "To" of the add operation and information associated with "From" of the delete operation coincide with each other, this set of add and delete operations can be deleted.

When an add operation is executed and then a convert operation is executed, if information associated with "To" of the add operation and information associated with "From" of the convert operation coincide with each other, the add and convert operations can be combined into one add operation in the difference information. In doing this, the information associated with "To" of the add operation is replaced by information associated with "To" of the convert operation.

When a convert operation is executed and then another convert operation is executed, if information associated with "To" of the preceding convert operation and information associated with "From" of the succeeding convert operation coincide with each other, the two convert operations can be combined into one convert operation in the difference information. In doing this, information associated with "From" of the preceding convert operation is set to information associated with "From" of the resulting convert operation, and information associated with "To" of the succeeding convert operation is set to information associated with "To" of the resulting convert operation.

When a convert operation is executed and then a delete operation is executed, if information associated with "To" of the preceding convert operation and information associated with "From" of the succeeding delete operation coincide with each other, the convert and delete operations can be combined into one delete operation in the difference information. In doing this, information associated with "From" of the resulting delete operation is replaced by information associated with "From" of the convert operation.

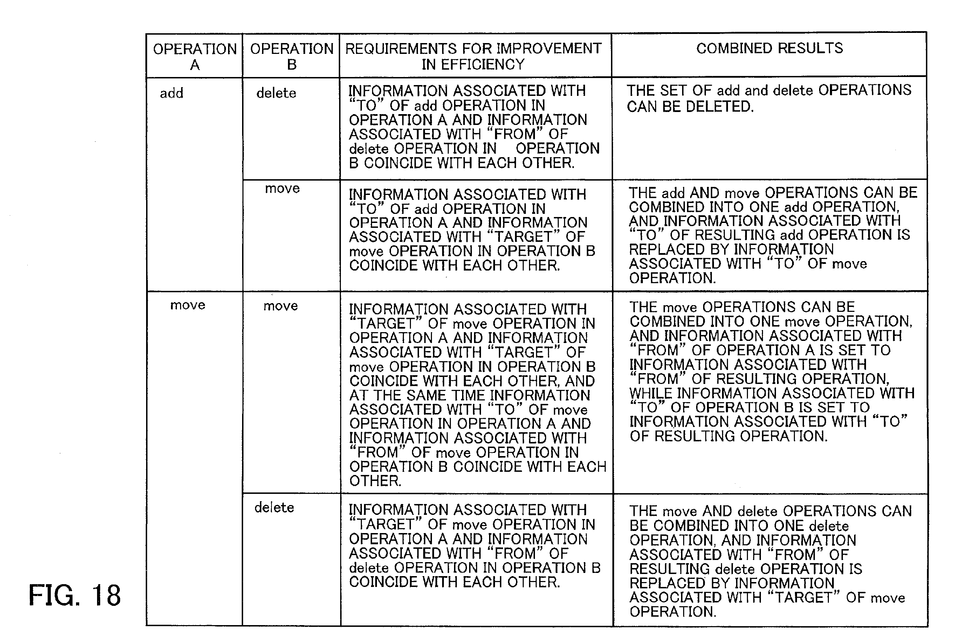

FIG. 18 is a diagram showing an example of operations performed on a linkbase, which can be improved in efficiency. FIG. 18 shows requirements for improvement in efficiency and results of grouping, assuming that each of operations in the column of "Operation A" is executed and then a corresponding one of operations in the column of "Operation B" is executed.

For example, when an add operation is executed and then a delete operation is executed, if information associated with "To" of the add operation and information associated with "From" of the delete operation coincide with each other, this set of add and delete operations can be deleted.

When an add operation is executed and then a move operation is executed, if information associated with "To" of the add operation and information in the column "Target" of the move operation coincide with each other, the add and move operations can be combined into one add operation in the difference information. In doing this, the information associated with "To" of the add operation is replaced by information associated with "To" of the move operation.

When a move operation is executed and then another move operation is executed, if information associated with "Target" of the preceding move operation and information associated with "Target" of the succeeding move operation coincide with each other, and at the same time information associated with "To" of the preceding move operation and information associated with "From" of the succeeding move operation coincide with each other, the two move operations can be combined into one move operation in the difference information. In doing this, information associated with "From" of the preceding move operation is set to information associated with "From" in the resulting move operation, and information associated with "To" of the succeeding move operation is set to information associated with "To" in the resulting move operation.

When a move operation is executed and then a delete operation is executed, if information associated with "Target" in the preceding move operation and information associated with "From" of the succeeding delete operation coincide with each other, the move and delete operations can be combined into one delete operation in the difference information. In doing this, information associated with "From" in the resulting delete operation is replaced by the information associated with "Target" of the move operation.

The following shows an example of edit history records concerning the XML schema, which are combined.
(11) Converting an element name A to an element name B.
(12) Newly adding an element C.
(13) Deleting an element B.

When the above operations are carried out, the edit history-accumulating section 120 accumulates the respective edit history records corresponding to the operations in the edit history-managing table 130.

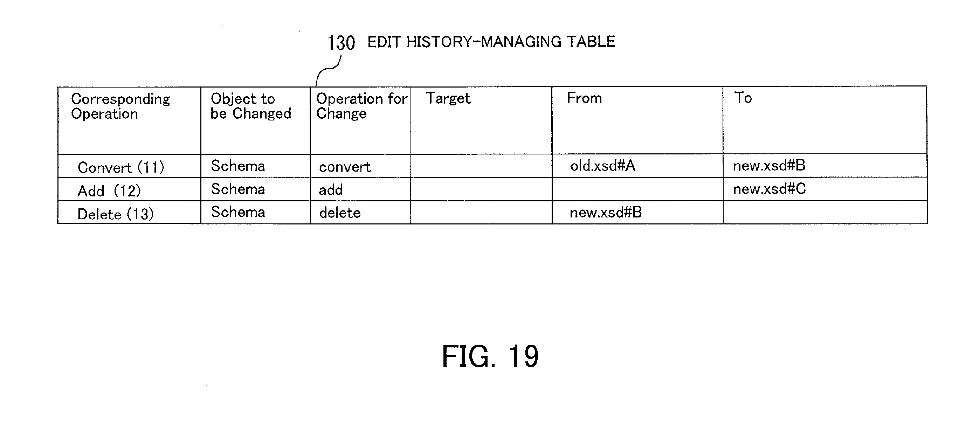

FIG. 19 is a diagram showing an example of an edit history-managing table which can be improved in efficiency. As shown in FIG. 19, edit history records corresponding to respective operations of "convert", "add", and "delete" are registered in the edit history-managing table 130. In the example illustrated in FIG. 19, numbers indicative of the steps of the operating inputs described above are shown in parentheses in the column "Corresponding Operation" as (11), (12), and (13).

In the above edit history records, information associated with "To" of the convert operation and information associated with "From" of the delete operation coincide with each other. Therefore, the convert and delete operations can be combined into one delete operation.

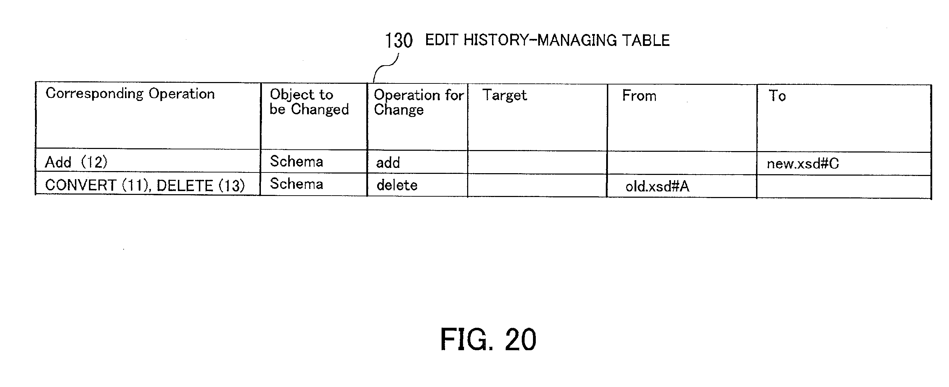

FIG. 20 is a diagram showing an example of the edit history-managing table improved in efficiency. In this edit history-managing table 130, the convert and delete operations in the edit history are combined into one delete operation.

### [Setting Option in Difference Information]

When the difference information 20 is generated, option information can be set on an edit operation-by-edit operation basis.

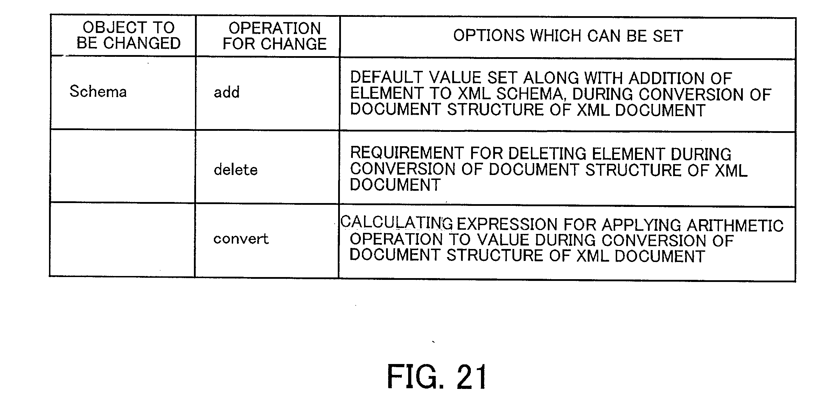

FIG. 21 is a diagram showing an example of option information which can be set. For example, when an add operation for adding an element is performed on XML schema, a default value to be set along with addition of the element during conversion of the structure of an XML document can be set to option information of the add operation.

Further, when a delete operation for deleting an element is performed on XML schema, a requirement for deleting the element during conversion of the structure of an XML document (e.g. to the effect that the element is deleted only when a value of the element set in the XML document becomes negative) can be set to option information of the delete operation.

Also, when a convert operation is performed on XML schema, a calculating expression for applying an arithmetic operation to a value during conversion of the structure of an XML document (e.g. for multiplying a numerical value by 100 so as to covert a value of the amount of money set in units of millions to a value in units of ten thousands) can be set to option information of the convert operation.

The setting of option information is performed when difference information is generated by the difference information-generating section 140.

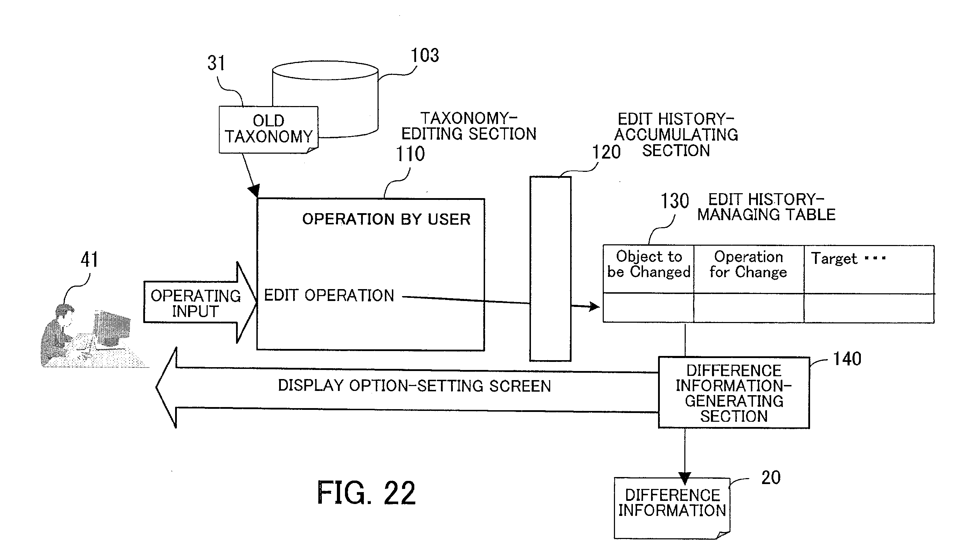

FIG. 22 is a conceptual diagram useful in explaining an option information-setting process. As shown in FIG. 22, when the user 41 performs an operating input to the taxonomy-editing section 110, an edit history record corresponding to the operating input is registered in the edit history-managing table 130 by the edit history-accumulating section 120. Then, when the difference information-generating section 140 generates difference information 20, an option-setting screen is displayed on the monitor 11.

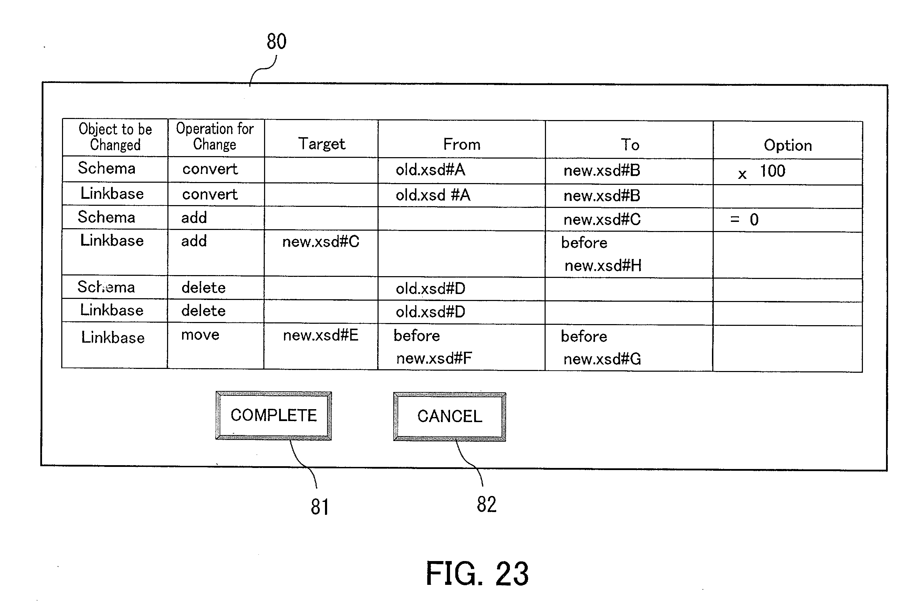

FIG. 23 is a diagram showing an example of the option-setting screen. The option-setting screen 30 displays the contents of edit history records, and information-setting areas (Option) are provided in association with the respective edit history records. By setting option information in any of the option information-setting areas, the user can set option information to the corresponding edit history records. In the example illustrated in FIG. 23, to the operation "convert" on the first line in the table, the option information of an expression "x 100" is set which means that a value should be multiplied by 100, during conversion. Further, to the operation "add" on the third line in the table, the option information of an expression "= 0" is set which means that a value of 0 should be set by default during conversion.

After the option information has been set, when a complete button 81 is depressed, the difference information 20 to which is set the option information is generated. It should be noted that when a cancel button 82 is depressed, the option-setting screen 80 is closed without reflecting the information entered by the operating inputs on the option-setting screen 80 on the edit history. As described above, option information can be set using the GUI.

Further, the taxonomy-editing section 110 can provide the functions of Undo (cancellation of immediately preceding operation)/Redo (repetition of immediately preceding operation) of an edit operation. In performing Undo/Redo of the edit operation, the edit history-accumulating section 120 also performs Undo/Redo of edit history records registered in the edit history-managing table 130 at the same time. This is made possible by associating numbers assigned to entries in the column of "Corresponding Operation" in the edit history-managing table 130 with entries in a management table (which is created internally by the taxonomy-editing section 110) for managing details of edit operations. More specifically, when Undo is performed, an edit history record having an entry of a corresponding operation assigned with a number indicating the immediately preceding operation is deleted. Further, when Redo is performed, an edit history record having the same entries as those of an edit history record having an entry of a corresponding operation assigned with a number indicating the immediately preceding operation, is added to the edit history-managing table 130.

Further, although in the above example, it is assumed that difference information 20 is generated when a new taxonomy 32 is output, this is not limitative, but it is also possible to register information indicative of the differences in the difference information 20, whenever an edit history record is recorded on the edit history-managing table 130.

It should be noted that the processing functions described above can be realized by a computer. To this end, there is provided a program describing the details of processing of the functions which the document structure-editing apparatus should have. By executing the program on the computer, the processing functions described above are realized on the computer. The program describing the details of processing can be recorded in a computer-readable recording medium. The computer-readable recording medium includes a magnetic recording device, an optical disk, a magneto-optical recording medium, and a semiconductor memory. The magnetic recording device includes a hard disk drive (HDD), a flexible disk (FD), and a magnetic tape. The optical disk includes a DVD (Digital Versatile Disk), a DVD-RAM (Random Access Memory), and a CD-ROM (Compact Disk Read Only Memory), and a CD-R (Recordable)/RW (ReWritable). Further, the magneto-optical recording medium includes an MO (Magneto-Optical disk).

The program may be distributed in a portable recording media, such as DVD and CD-ROM, which store the program . Further, the program can be stored in a storage device of a server computer connected to a network, and transferred from the server computer to another computer via the network.

When the program is executed by a computer, the program stored in a portable recording medium or transferred from the server computer is stored into a storage device of the computer. Then, the computer reads the program from its storage device and executes processing based on the program. The computer can also read the program directly from the portable recording medium and execute processing based on the program. Further, the computer may also execute processing based on a program which is transferred from the server computer whenever the processing is to be carried out.

As described above, according to the present invention, whenever an operating input is performed, edit history records of editing performed on document structure-defining information are recorded, and difference information is generated based on the edit history records. This makes it possible to properly generate difference information indicative of the differences between a structured document before an edit and the structured document after the edit.

The foregoing is considered as illustrative only of the principles of the present invention. Further, since numerous modifications and changes will readily occur to those skilled in the art, it is not desired to limit the invention to the exact construction and applications shown and described, and accordingly, the invention includes all suitable modifications within the scope of the appended claims.

According to the apparatus, method and program of the present application, the processing and storage requirements needed for updating document structures can be reduced by forming an edit history and difference information. Furthermore, the structure of multiple documents can be changed efficiently and accurately, with a minimum of user intervention. Thus, maintenance and storage of documents in the form of electronic data files is facilitated.

## Claims

1. A document structure-editing program for editing document structure-defining information defining a structure of a structured document, the program containing program code which, when executed by a computer, causes the computer to function as:
document structure-editing means for editing the document structure-defining information in response to an operating input;
edit history-recording means for recording a record of an edit history indicating details of editing of the document structure-defining information, on a storage device, whenever the operating input is performed; and
difference information-generating means for generating difference information indicative of differences between the document structure-defining information before an edit and the document structure-defining information after the edit, based on the edit history recorded by the edit history-recording means.

2. The document structure-editing program as claimed in claim 1, wherein the document structure-defining information comprises a schema defining elements constituting the structured document, and a linkbase defining associations between the elements and information associated with the elements.

3. The document structure-editing program as claimed in claim 2, wherein when edit processing is carried out on both of the schema and the linkbase in response to one operating input, respective records of the edit history concerning the schema and the linkbase are recorded on the storage device.

4. The document structure-editing program as claimed in any preceding claim, wherein the difference information-generating means generates the difference information after combining a plurality of records of the edit history satisfying predetermined efficiency-improving requirements into one record of the edit history.

5. The document structure-editing program as claimed in claim 4 when appended to claim 2 or 3,
wherein the difference information-generating means individually defines the efficiency-improving requirements for improving efficiency of records of the edit history concerning the schema, and the efficiency-improving requirements for improving efficiency of records of the edit history concerning the linkbase.

6. The document structure-editing program as claimed in any preceding claim, wherein the difference information-generating means is responsive to an operating input for adding option information indicative of a conversion rule for a corresponding one of the elements of the structured document to the edit history, and generating the difference information with the option information.

7. The document structure-editing program as claimed in any preceding claim, wherein when an operating input designating repetition of an immediately preceding operating input is carried out, the edit history-recording means adds an edit history record indicating the same operation as indicated by a record of the edit history recorded in response to the immediately preceding operating input.

8. The document structure-editing program as claimed in any preceding claim, wherein when an operating input designating cancellation of an immediately preceding operating input is carried out, the edit history-recording means deletes a record of the edit history recorded in response to the immediately preceding operating input from the storage device.

9. A document structure-editing method for editing document structure-defining information defining a structure of a structured document, comprising:
a document structure-editing step of editing the document structure-defining information in response to an operating input;
an edit history-recording step of recording a record of an edit history indicating details of editing of the document structure-defining information, on a storage device, whenever the operating input is performed; and
a difference information-generating step of generating difference information indicative of differences between the document structure-defining information before an edit and the document structure-defining information after the edit, based on the edit history recorded in the edit history-recording step.

10. A document structure-editing apparatus for editing document structure-defining information defining a structure of a structured document, comprising:
document structure-editing means for editing the document structure-defining information in response to an operating input;
edit history-recording means for recording a record of an edit history indicating details of editing of the document structure-defining information, on a storage device, whenever the operating input is performed; and
difference information-generating means for generating difference information indicative of differences between the document structure-defining information before an edit and the document structure-defining information after the edit, based on the edit history recorded by the edit history-recording means.

11. A computer-readable recording medium storing a document structure-editing program according to any of claims 1 to 8.
